# EUROPEAN PATENT APPLICATION

(11) **EP 4 670 478 A1**
(43) Date of publication of application: **31.12.2025**
(21) Application number: 24185516.2
(22) Date of filing: 28.06.2024
(51) Int. Cl.: A01B 59/06

(54) **PTO/HYDRAULICS COUPLING DEVICE**

(71) Applicant: Duffy, Mark, H18 X670 Co.Monaghan (IE)
(72) Inventor: Duffy, Mark, H18 X670 Co.Monaghan (IE)
(74) Representative: Tomkins & Co

(57) **Abstract**

The coupling device is provided for connecting an implements PTO and hydraulic/electronic connections to the tractors supply source which includes a base frame substructure (**figure 8**), with parallel mounting plates (**1, 2**), a four-point linkage lifting frame (**16, 17**), four linkage arms (**12, 13**), a hydraulic/electronic connector bank (**figure 7**), with mounting plate (**8**), two hydraulic piggy-back solution cylinder units (**40**, **42**), two piggyback hydraulic cylinder mounting plates (**25**), coupling unit **(figure 17),** with a telescopic box section (**68**), with transfer shaft (**72**), a jaw coupler (**73**), and holding stand plate (**55**), PTO spring loaded coupling hub (**figure 32**), a securing sleeve (**124**), compression spring (**126**), and a jaw coupler (**122**), foldable resting stand unit **(figure 28),** with resting stand plate (**87**), two clamping plates (**76**), two tyre bumper guards (**86, 98**), two jack leg side plate (**99**), and ground plate (**105**), an inseparable three stage PTO drive shaft **(figure 38),** two universal joints (**112, 113, 133, 131, 132, 138**), two profiled tubes (**134, 135**), one profiled shaft (**136**). Thus, the base frame substructure is secured to the tractors back-end centre housing without altering any existing features, the coupling unt is a free floating device that transfers from tractor to implement by the four point lifting frame, this coupling unit device connects the implements hydraulic/electronic connections to the tractors supply, a three stage inseparable drive shaft is connected from the coupling unit to the implements rotary appliance that provides maximum length in the area where space is constrained, when the coupling unit is not is operation it is rested upon the foldable resting stand unit which is universally mounted to an implements drawbar, attached is a retractable hydraulic jack leg that elevates the implements drawbar to a set ground height, this device thereby saves the operator time and energy along with eliminating PTO hazards and accommodating paralysed operators with no requirement to dismount from the tractors seat. Also avoiding hinderance of tractors preexisting 3-point linkage, meaning the operator can simultaneously use a 3-point linkage implement while the coupling units lifting frame is still attached to the tractors back-end centre housing.

## Description

### Introduction

This Invention relates to connecting tractor implements, hydraulics/electronics and PTO (power take off), in particular trailed based implements with a draw bar.

### Background

A tractors power take off is a common feature among agricultural tractors, used to transfer rotary power to implements which requires a power shaft.

Along with this, these implements have hydraulically/electronically operated components that require, hydraulic/electronic supply from the tractor.

These implements are often interchanged to and from the tractor, because of this it is desirable to have a coupling device that has a quick and easy removal feature for the implement.

With the use of a PTO drive shaft and hydraulic/electronic connections to connect the implement, the operator suffers several disadvantages.

For example, with the drive shaft and hydraulic/electronics it results in leaving the cab of the tractor, to connect and disconnect from tractor to implement.

It can also be very time consuming and a difficult task to carry out.

PTO Entanglement is a cause of major concern. Many machine operators have been killed and seriously injured as a result of PTO entanglement.

In order to overcome the problems associated with coupling implements, an automatic coupling device is needed for an implement to be quickly and easily connected and disconnected with a tractor.

Typically, a PTO coupling device is needed to eliminate PTO hazards with implements.

The objective of the invention is to overcome these problems prior listed.

### Summary of invention

According to the aspect of the present disclosure, a coupling device is provided for connecting an implement to a tractors PTO shaft and hydraulic/electronic source.

The coupling device includes a lifting frame substructure, a four-point linkage lifting frame, two hydraulic piggy-back solution cylinder units, two hydraulic cylinder mounting plates, a PTO spring loaded coupling hub, a hydraulic/electronics fitting connector bank, a coupling unit, foldable hydraulic coupling unit resting stand, a hydraulic jackleg and inseparable three stage PTO drive shaft.

The lifting frame is attached to a tractors back-end centre housing. The two piggyback hydraulic lifting cylinders are attached to mounting plates that are also adapted to suit the tractors back-end centre housing.

The coupling unit is a universal unit that is free floating transferring from tractor to implement, using the lifting frame and coupling unit stand when connecting and disconnecting.

The hydraulic folding coupling unit stand is universally bolted to the implements draw bar. The hydraulic jack leg is also bolted to the coupling unit stand frame. The spring-loaded coupling hub is secured to the tractors power take off (PTO) shaft.

The inseparable three stage drive shaft is connected from the implement's rotary appliance to the coupling unit.

When connecting the implement, from the cab the lifting frame is unlatched and lowered by the piggyback solution hydraulic cylinders. The tractor is then reversed guiding the lifting frames hooks into position to receive the coupling unit. At this stage by lifting the lifting frame, it will hook onto the coupling unit removing it from the coupling unit holding stand.

Raising the lifting frame along with the coupling unit, it will then extend the inseparable PTO shaft. Then seating the lifting frame back to its resting position is where the linkage arms meet adjusted stoppers. From here the tractors pick up hitch is lowered to pick up the implements draw bar, pursuing to lock the hitch with the implement attached.

The hydraulics/electronics fittings connector bank is then linked with the coupling unit. Oil and electrical power can now be sent to the implement. Then in sequence, oil is sent to the PTO jaw coupler cylinders sending it forward to mesh with the PTO spring loaded coupling hub, and to the coupling unit stand retracting it, and to the hydraulic jack leg raising it.

At this point the implements draw bar has been hooked up, the PTO drive shaft has been coupled, and the hydraulic/electronic supplies have been linked.

When disconnecting the implement, in sequence the jackleg is lowered, the coupling unit stand is raised, and the coupling unit PTO jaw coupler is retracted from the spring-loaded coupling hub. Now the hydraulic/electronics fittings connecter bank is retracted, disconnecting the hydraulics/electronics from the tractor.

The tractors pick up hitch is then lowered, and the draw bar is dropped off resting on the hydraulic jackleg. Now the lifting frame is unlatched, while reversing the tractor, the lifting frame is then lowered. The inseparable PTO shaft is retracted, so that now the coupling unit can be dropped off and rested on the coupling unit stand, which is at a set height by the jackleg.

Once the coupling unit has been rested on the coupling units stand, the tractor can then pull forward, retracting the lifting frame into its resting position. From this, the implement has been unattached and the PTO drive shaft is disconnected along with the hydraulics/electronics.

With this coupling device, the operators leave the coupling unit along with the implement and can resume to using common implements with the pickup hitch and 3-point linkage.

The inventions method of design comprises of a bolt on draw bar resting stand frame, a coupling unit and the tailor-made bolt on substructure four point lifting frame that attaches to a tractors centre back-end housing, without disturbing or altering any existing features of the tractor or implement.

### Brief description of drawings

The invention will now be described by way of which one with reference to the accompanying drawings in which:
Figure. 1 Is an isometric view of the tractor and implements draw bar with the coupling device assembly applied and connected.
Figure. 2 Is an enlarged perspective view from the coupling units locking device of Figure 1.
Figure. 3 Is a side view of the coupling unit disconnected from the four-point lifting frame and also the implement separated from the tractor.
Figure. 4 This is an enlarged view of the coupling unit resting on the coupling unit stand, using the stub catch plate, along with the adjustable angle adjustors, from figure 3.
Figure. 5 This is a side view of the coupling device connected and the tractor and implement attached.
Figure. 6 This is a plan view from above of the four-point lifting frame along with the hydraulic/electronic connector bank.
Figure. 7 Is a perspective view from above and one side of the hydraulic/electronic fittings connector bank.
Figure. 8 Is perspective view from above and one side of the lifting frame substructure and four-point lifting frame assembly with lowered hooks.
Figure. 9 Is a side elevation view of the four-point lifting frame in its retracted resting position.
Figure. 10 Is an enlarged perspective view from the side of the adjustable stoppers on the four-point lifting frame linkages from figure 9.
Figure. 11 Is a perspective view from above and one side of the four-point lifting frame and substructure assembly in its retracted resting position.
Figure. 12 Is an enlarged perspective view from above and one side showing the latching system of the four-point lifting frame from figure 11.
Figure. 13 Is an enlarged perspective view from above and one side showing the coupling units locking hook from figure 11.
Figure. 14 Is a sectional perspective view of the four-point lifting frames and substructure assembly.
Figure. 15 Is a front elevation view showing the four-point lifting frame in its upright retracted resting position.
Figure. 16 Is an exploded perspective view of the PTO coupling unit assembly.
Figure. 17 Is perspective view from above on one side of the coupling unit.
Figure. 18 Is side elevation view of the coupling unit with the PTO jaw coupler telescopically extended, in its engaged position.
Figure. 19 Is exploded side elevation view of the coupling unit resting pin and circular catching plate that rests the coupling unit on the coupling unit stand.
Figure. 20 Is front elevation of the coupling unit showing the attachment lifting points that the four-point lifting frame links to.
Figure. 21 Is back elevation of the coupling unit showing the circular catch plate, the PTO transfer shaft and the carrier bearing.
Figure. 22 Is a sectional perspective view of the coupling unit showing the carrier bearing and PTO transfer shaft assembly, with the coupling units jaw couplers meshed and the hydraulic/electronic connections linked.
Figure. 23 Is an exploded sectional view of the transfer PTO drive shaft bored out centre hole and the tractors PTO shaft inserted in the transfer shafts centre bore,
   from figure 22.
Figure. 24 Is a side elevation of the tailor-made bolt on draw bar mounted frame with the coupling unit resting stand raised and hydraulic jack leg lowered.
Figure. 25 Is a side elevation view of the tailor-made bolt on draw bar mounted frame with coupling unit stand retracted and hydraulic jack leg raised.
Figure. 26 Is a perspective view from above on one side of the tailor-made bolt on draw bar mounted frame attached to an implement's draw bar.
Figure. 27 And enlarged perspective view from above on one side of the coupling unit resting stands angle adjustors, shown in figure 26.
Figure. 28 Is perspective you from below and one side of the tailor-made bolt on draw bar mounted frame assembly.
Figure. 29 Is front elevation view of the tailor-made bolt on draw bar mounted frame demonstrating the coupling unit stand raised and hydraulic jack leg lowered, also showing the tyre bumper protection guards.
Figure. 30 Is an exploded section view of the coupling unit resting stand showing the coupling units resting stand plate, cut out U slot and tapered guided track along with levelling coupling unit brackets, from figure 29.
Figure. 31 Is a front elevation view of the spring-loaded coupling hub Jaw coupler.
Figure. 32 Is a perspective view from above and one side of the spring-loaded coupling hub assembly.
Figure. 33 Is side elevation view of the spring-loaded coupling hub.
Figure. 34 Is a side elevation of the inseparable three stage PTO drive shaft.
Figure. 35 Is a sectional perspective view of the inseparable three stage PTO drive shaft fully extended, showing the 3 Interlinked inseparable profiled tubes and shaft.
Figure. 36 Is an exploded sectional view of the exterior profile tube and centre tube profile demonstrating the inseparable design, from figure 35.
Figure. 37 Is an exploded section view of the centre profile tube on the smallest inner spined shaft, demonstrating the inseparable design, from figure 35.
Figure. 38 Is a perspective view from above and one side of the inseparable three stage PTO drive shaft.
Figure. 39 Is a side elevation of the inseparable three stage PTO drive shaft, showing the three profiled tubes stepped in size and portraying the spinal profiles.
Figure. 40 Is a side elevation of an alternative swivel design for the coupling unit resting stand fixed to the implement's drawbar.
Figure. 41 This is a plan view from above of the alternative swivel design for the resting stand fixed to the implement's drawbar.
Figure. 42 This is a plan view from above of the alternative swivel design for the resting stand rotated and meeting with stopper stubs.
Figure. 43 Is a perspective view from above and one side of the alternative swivel design for the resting stand rotated and meeting with stopper stubs.
Figure. 44 Is a perspective view from above and one side of the alternative swivel design for the resting stand assembly attracted to the implement's drawbar.

### Detailed description of the invention

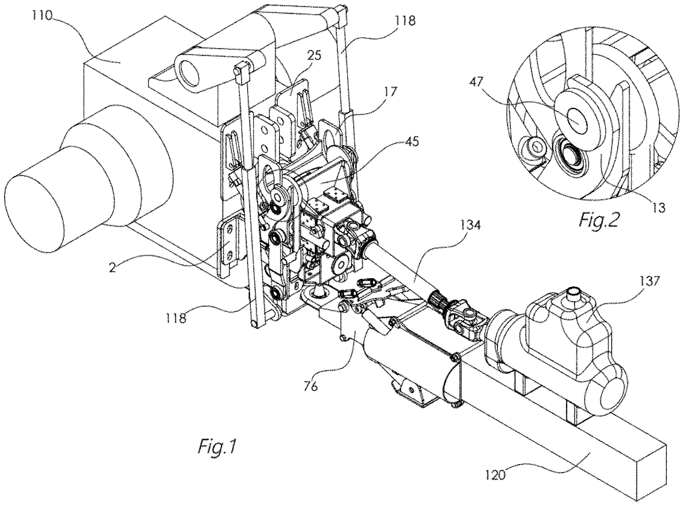

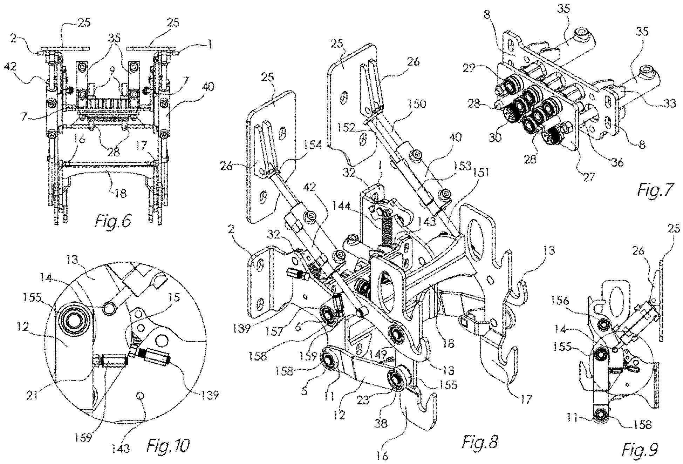

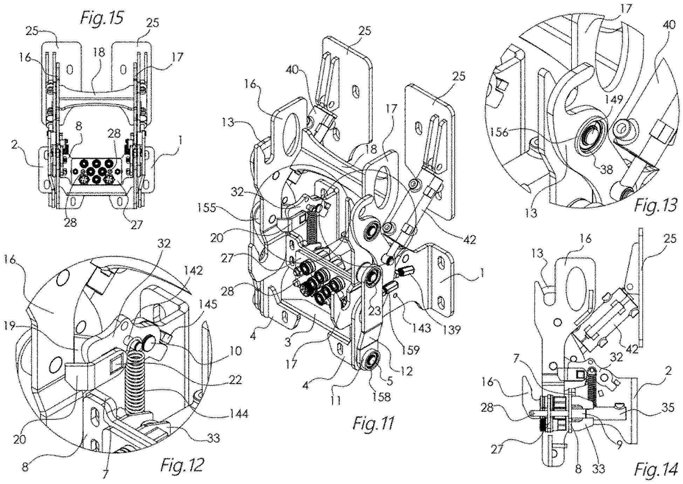

Referring to **Figures 1** to **44****,** a tractors centre back-end housing **110,** which supports a lifting frame substructure **figure 8****,** that is secured to the back-end centre housing **110** by four bolt holes slotted for height adjustment in parallel mounting plates **1** and **2.** These two components are joint together by cross member plates **3** and **4,** also with slotted bolt holes for height adjustment, that make up one singular substructure, best seen in **figure 11****,**

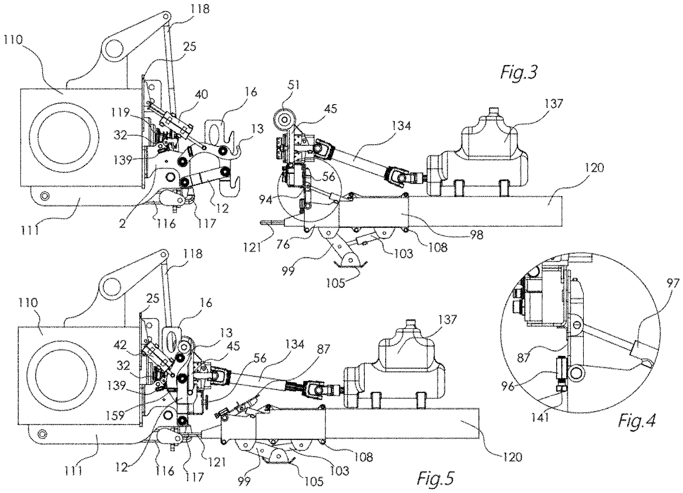

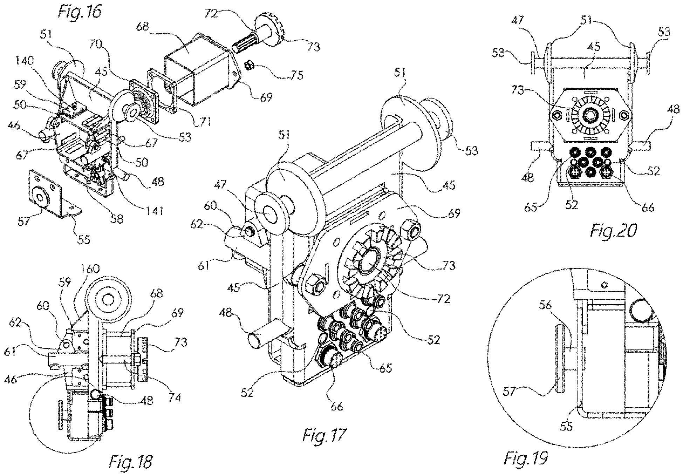

The lifting frame substructure has four linkage arms **12** and **13** attached to its parallel mounting plates **1** and **2,** these pivot on fixed pins **5** and **6** swivelling on bearings **158,** held on by a circlip. These linkage arms **12** and **13** link the substructure mounting plates **1** and **2** to the four-point lifting frame hook plates **16** and **17,** by fixed pins **23** and **149,** swivelling on bearings **38.** The lifting frame is a four-point linkage made up of two vertical hook plates **16** and **17,** with four hook profiles and are attached by a stability cross member **18,** this lifting frame is used to retrieve and drop off the coupling unit **figure 17****,** best seen in **figure 3****.**

Two hydraulic cylinder mounting plates **25,** with slotted holes for height adjustment, along with cylinder bolting plates **26,** are secured to the tractors back-end centre housing **110.** They are located above the lifting frame substructure **1** and **2,** which holds two twin piggyback solution hydraulic lifting cylinders **40** and **42.** Which are connected to linkage arms **13,** the cylinders are used to lower and lift the lifting frame seen in **figure 8** and **figure 11****.**

When the lifting frame **16** and **17** is lowered, the tractor is then reversed and the lifting frame is aligned with the coupling unit, in **figure 17****.** The lifting frames four hooking points on hook plates **16** and **17** makes contact with the coupling units lifting bar **47** and lower lifting pins **48.** From here the lifting frame is lifted and tapered guide plates **51** slide the coupling unit **figure 17** into place, lifting the coupling unit up of its resting stand plate **87.**

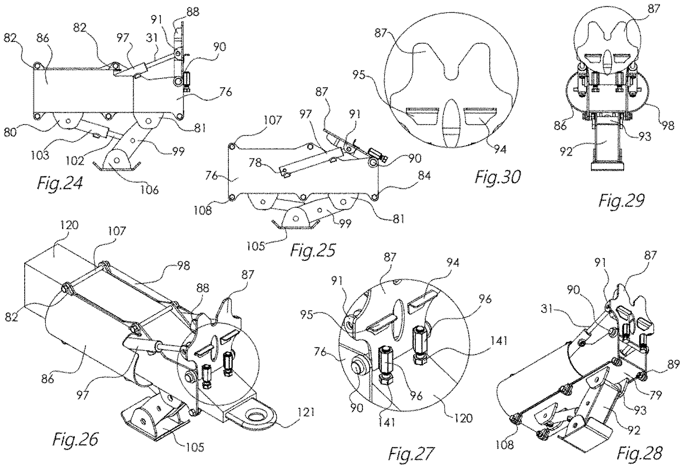

The coupling unit stand plate **87** is where the coupling unit **figure 17** rests when in its idle position, seen in **figure 3****.** Stand plate **87** has a tapered profile V cut out leading into a U slotted hole **figure 30****.** When un-attaching the coupling unit **figure 17****,** the coupling unit resting pin **56** and circular catching plate **57** is guided into resting stand plate **87,** by the tapered track seen in **figure 4****.** The catching plate **57** prevents the coupling unit **figure 17** sliding off its resting stand **87,** a space is left between holding stand plate **55** and catching plate **57** so that the coupling unit resting pin **56** can slot easily into resting stand plate **87.** Holding stand plate **55** is bolted onto structural bottom frame plate **54** and mounting plate **58** for easy access to the receiving hydraulic/electronic power connector fittings **65** and **66.**

Two 90-degree levelling brackets **94** and **95** are attached to resting stand plate **87.** Holding stand plate **55** resting upon these plates and their purpose is to level the coupling unit **figure 17** when the resting pin **56** is rested on stand plate **87,** seen in **figure 3****.** Two threaded adjuster long nuts **96,** are fixed to resting stand plate **87** with threaded adjuster bolts **141,** that meet the implements draw bar **120.** These adjusters bolts **141** are used to set the angle of resting stand plate **87** for the coupling unit, when attaching and detaching the coupling unit **figure 17****.** This is best illustrated in **figures 26** and **27****.**

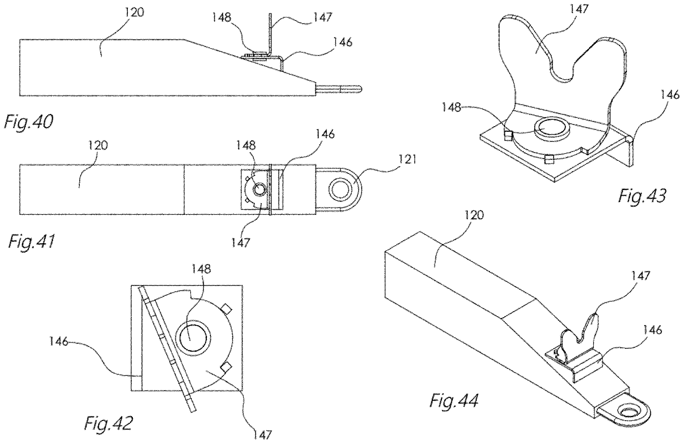

An alternative design for the resting stand can be seen in **figure 44****.** This design consists of a swivelling stand with a tapered V profile cut out leading into a U-shaped slotted hole resting stand plate **147** that rotates to meet stoppers on folded base plate **146** seen in **figure 42****,** either left or right depending on the angle of attaching or detaching of the coupling unit, **figure 17****.** This plate pivots on a pin **148,** that is welded to the folded base plate **146,** which is fixed to the implement's drawbar **120.**

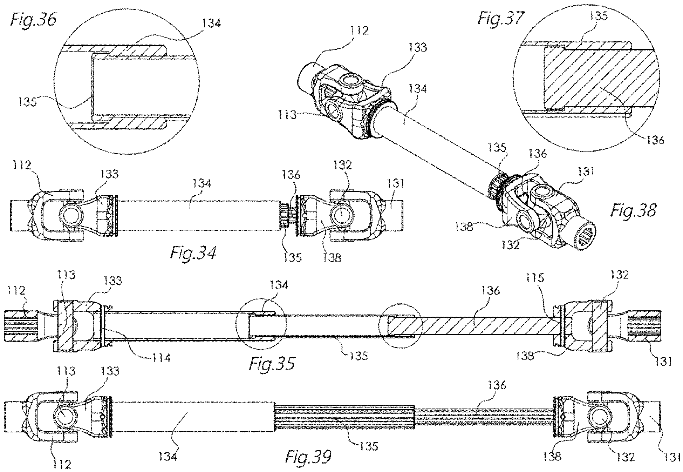

As the lifting frame is lifted, the inseparable PTO drive shaft **figure 38** extends, this shaft consists of two universal joints and three stage profiled tubes **figure 39****.** The PTO drive shaft yoke end **131** is connected to the implements PTO rotary appliance **137,** also attached is a universal cross **132** and yoke end **138.** The smallest profile tube **136** is connected to yoke end **138** and fixed by a roll pin **115.**

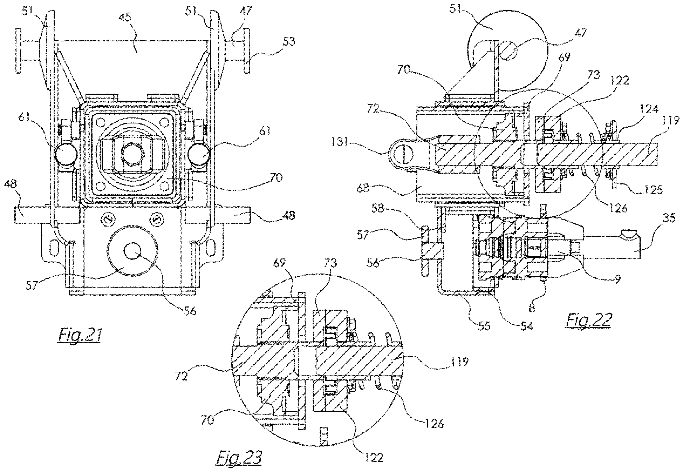

At the coupling unit **figure 17****,** it has a carrier bearing **70,** which holds a transfer shaft **72** best seen in **figure 22****.** Connected to this transfer shaft **72** is the opposite side to the inseparable PTO shaft **figure 34****,** by another yoke end **112** attach to this is a universal cross **113** and yoke end **133,** that is fitted to the profile shaft **134** fixed by another role pin **114.**

The smallest inner profile shaft **136** and largest outer profile tube **134** are linked by a third middle profile tube **135.** When the PTO shaft is being lengthened, inner profile shaft **136** which has splines on the outer surface only, **figure 39****,** slides within the middle profile tube **135** which has a short inner receiving splines shoulder seen in **figure 37****,** these splines mesh inner profile tubes **136** outer surface splines, to the middle profile tubes **135** inner splines **figure 37****.** Inner profile shaft **136,** has a machined shoulder end that makes contacts with middle profiled tube **135** end stepped inner splines, so that when lengthening the shaft it stops middle profiled tube **135** and inner profiled shaft **136** coming apart **figure 37****.**

On the other end of the inseparable PTO drive shaft, the outer profiled tube **134** Is attached to yoke end **133.** Outer profiled shaft **134** is connected to middle profiled tube **135,** as the PTO shaft is lengthened, middle profile tube **135** slides within outer profile tube **134** until its stepped shoulder meets outer profiled tube **134** inner splines shoulder, seen in **figure 36****.** This stopping outer profiled tube **134** and middle profiled tube **135** coming apart, **figure 36****.**

The outer profiled tube **134** and middle profiled tube **135,** are meshed by splines on middle profiled tube **135** outer surface and the inner stepped surface of outer profiled tube **134.** Note that the inner surface of both outer profiled tube **134** and middle profiled tube **135** have not got splines the full length of inside the tubes, to allow for the machined shoulder to catch the end of the small section of spline, to prevent the shaft coming apart.

This design is to provide maximum length in the area where space is constrained, **figure 5****.** It also prevents the separation of the drive shaft when the coupling unit **figure 17** is attached to the lifting frame, **figure 11****.** At the stage when the lifting frame is in its seating position and before the implements drawbar **120** hook eye **121** is attached to the tractors pick up hitch hook **117,** best seen in **figure 5****.**

At this stage the coupling unit **figure 17****,** is attached to the four-point linkage lifting frame **figure 8****.** As it continues to retract, lifting hook plates **16** and **17** have a stepped folded and formed section so that when the lifting frame is in its seated position **figure 11****,** lifting hook plates **16** and **17** will slot in to clear the substructure without collision of, parallel mounting plates **1** and **2.**

While the lifting frame is being retracted, latching hooks **32** that swivel on hook hinge pins **10** fixed to the base frames mounting plates **1** and **2.** The latching hooks **32** that are held under tension by torsion springs **144,** based on a hook spring pin **142** and base spring pin **143.** Latch stoppers **145** hold the latch hooks at the correct angle, **figure 12****.** The latching hooks **32** are pressed against by a latching bar **22** fixed to the lifting hook plates **16** and **17,** secured by latching brackets **19** and **20.**

Latching bar **22** passes under the latching hook **32** locking it in place, **figure 12****.** These latching systems are located on either side of the lifting frame substructure parallel mounting plates **1** and **2.** When unlatching to release the lifting hook plates, latching hooks **32** are lifted allowing the latching bar **22** to clear from under the latching hooks **32,** freeing lifting hook plates **16** and **17.**

When the lifting frame has been retracted fully **figure 11****,** linkage arms **13** has closed its profiled locking hooks **figure 13** on the coupling units lifting bar **47,** locking it in place from jumping out, best seen in **figure 2** and **figure 13****.** In this position linkage arms **13** is rested against threaded adjuster stopper bolts **15** and long nuts **139,** that is fixed to both sides of the lifting frame substructure parallel mounting plates **1** and **2.**

Linkage arms **12** is rested against thread stopper bolts **21** and long nuts **159** that is fixed to linkage arm **13,** at this point the lifting hook plates **16** and **17** is fully retracted with the coupling unit hooked on, seen in **figure 5****.**

The tractors pick up hitch base **116** is then lowered to attach the implement drawbar **120.** Next the implements hydraulics/electronics connectors **29** and **30,** and receiving hydraulics/electronics connectors **65** and **66,** are connected using the fittings connector bank, **figure 7****.** The fittings connector bank assembly has a profiled connector bank mounting plate **8** that has four slotted holes for height adjustment, that when bolted in place to mounting brackets **7** fixed to parallel mounting plates **1** and **2,** which sits between the parallel mounting plates **1** and **2,** seen in **figure 6****.** Using two double acting hydraulic cylinders **35,** that are bolted to inner side of connector bank mounting plate **8,** by cylinder plates **33** welded to hydraulic cylinders **35.**

The hydraulic cylinder rod **36** end is threaded and bolted into fitting connector plate **27.** Which push and pull the fittings connector plate **27,** when connecting and disconnecting the hydraulic/electronic connectors **29** and **30,** with the receiving hydraulics/electronics connectors **65** and **66.** The fitting connector plate **27** uses two sliding guide rods **28,** these rods slide in two bushing guide sleeves **9,** that are fixed to one side of connector bank mounting plate **8,** seen in **figure 6****.** These guide the fittings connector plate **27** straight when connecting the hydraulic/electronic connectors **29** and **30.**

Now the sliding guide rods **28** make contact with the coupling units guide bushings **52,** seen in **figure 20****.** These guide bushings **52** are used to align the fittings connector plate **27.** Sliding guide rods **28** and guide bushings **52** make contact first before the hydraulic/electronic connectors **29** and **30,** so that when the hydraulic/electronic connectors **29** and **30** are connecting, they line up correctly with the coupling units receiving hydraulic/electronic connectors **65** and **66,** **figure 22****.**

Once the hydraulic/electronic connectors have been connected, oil is then sent to the coupling units telescopic box section **68** hydraulic cylinders **61.** These cylinders are welded to amounting bracket **62** that is based on a fixed pin **60,** welded to hollow box section frame **46.** The hydraulic cylinder rod **74** end is threaded and bolted to profiled face plate **69,** to push and pull the jaw coupler **73** when engaging and disengaging the PTO, **figure 18****.**

The carrier bearing **70** frame consists of a box section **68** and face plate **69.** The carrier bearing **70** is inserted into a box section **68** with a spacer plate **71** behind it. Both are bolted to the attached face plate **69,** the carrier bearing **70** supports the transfer shaft **72** with a welded on the jaw coupler **73.** The box section **68** slides within hollow box section frame **46,** that is fixed to the coupling units main structural frame **45** sliding on six nylon wear guides **67.**

Six rectangular slotted holes on each side of box section frame **46** along with six surrounding spacer plates **50** welded to box section frame **46** for nylon wear guides **67,** best seen in **figure 16****.** Four threaded holes in spacer plates **50** that are located on each side of box section frame **46,** on top of these is six cap plates **59** that have four outer bolt holes, **figure 16****.** These are to secure it to spacer plate **50** and also to hold the six nylon wear guides **67** in place. A centre hole on cap plates **59** has an adjustable threaded nut **140** and threaded bolt **39,** to tighten the nylons wear guides **67** against the box section **68** as it wears.

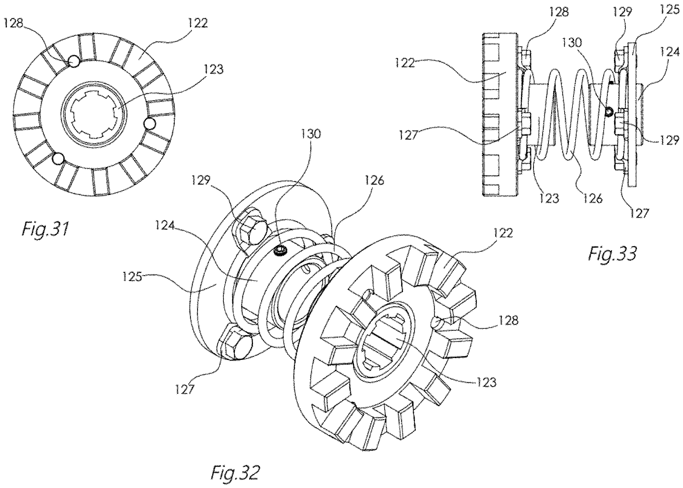

As the jaw coupler **73** is pushed forward, it then comes into contact with a receiving jaw coupler **122.** This jaw coupler is a component of the spring-loaded coupling hub assembly, seen in **figure 32****.** The coupling hub is attached to the tractors PTO shaft **119.** The spring-loaded coupling hub has a securing sleeve **124** and circular profiled plate **125,** that is secured onto the tractors PTO shaft **119.**

Circular profiled plate **125** has a compression spring **126,** this spring keeps jaw coupler **122** under constant compression when it is pressed by the coupling units jaw coupler **73.** It makes sure the machined teeth mesh and stay meshed when the PTO is engaged, best seen in **figure 22****.** Clamped to profiled plate **125** by means of three spring clamps **127,** using threaded bolts **129,** this spring sits over securing sleeve **124** centring the compression spring **126,** **figure 33****.**

The securing sleeve **124** has two grub screws **130,** located 90 degrees apart to tighten the coupling hub assembly **figure 32** to the tractors PTO shaft, **119.** A jaw coupler **122** is welded to a universal six splined PTO sleeve **123,** that slides onto the tractors PTO shaft **119** meshing with splined PTO sleeve **123** splines, in front of securing sleeve **124.** This jaw coupler **122** is fixed to the opposite side of compression spring **126,** by spring clamps **127** and threaded bolts **128,** to prevent the jaw coupler **122** separating from the assembly, **figure 33****.**

As the coupling units jaw coupler **73,** is pushed forward it is pressed against the receiving jaw coupler **122** that compresses the compression spring **126** back. Because of this, the coupling hub **figure 32** has a space between the 6 splined PTO sleeve **123** and the securing sleeve **124,** so that when these jaw couplers meet and don't mesh first time, jaw coupler **122** can be shoved back until jaw coupler **73** and jaw couplers **122** machined teeth and grooves mesh together.

As the PTO is engaged and rotates it springs jaw coupler **122** forward meshing jaw coupler **73** and jaw couplers **122** teeth together, best seen in **figure 22****.** From this the tractors PTO shaft **119** has been engaged with the implements PTO rotary appliance **137.**

Now in sequence the coupling units resting stand plate **87** is retracted, **figure 25****,** by two hydraulic cylinders **97** at either side of the implement's drawbar **120,** based on a fixed pin **78** welded to each side clamping plate **76.** With the cylinder rod **31** secured at cylinder mounting brackets **91,** that are welded to coupling unit resting stand plate, **87.**

These clamping plates **76** are placed one each side of the implement's drawbar **120,** clamping them to the drawbar by bolts **107** and **108.** The coupling unit resting stand plate **87** has a hinging pin **90** attached, that hinges in a bored hole in both side clamping plates **76.** Two tyre bumper guards **86** and **98** are bolted by two bolts **107** and **108,** with four bolting tabs **82,** to either side of the implement's drawbar **120,** onto the side clamping plates **76.** These tyre bumper guards **86** and **98** are to prevent the tractors tyre striking the coupling unit stands hydraulic cylinders **97** when turning.

Also, at the same time the hydraulic jack leg, best seen in **figure 24****,** is lifted **figure 25****,** by means of a single double acting hydraulic cylinder **103** secured by pins at mounting brackets **80** and jack leg side plates **99.** The jack leg is made up of two jack leg plates **99** braced together by a bracing plate **92** and a wear pivot bushing **93.** Attached to the jack leg is a swivelling foot assembly made up of a folded ground plate **105** and jack foot securing plates **106** pivoting on the jack leg plates **99** that rests parallel with the grounds angle, **figure 24****.** The jack leg assembly is attached to a sub assembly of jack leg mounting plates **81** and a base plate **79** that is placed on bottom of the implement's drawbar **120.** The base plate **79** has six bolt tabs **89** attached that clamp the jack leg sub assembly, best seen in **figure 28****,** to both side clamping plates **76** of the implement's drawbar **120.**

With this universal design it allows the assembly to be clamped and bolted onto any implement with a trailed drawbar **120.**

From here the hydraulic/electronic fittings have been connected, **figure 22****.** The PTO shaft has been linked, **figure 22****.** The jack leg has been lifted, **figure 25** and the coupling unit stand has been retracted, **figure 25****.**

At this stage the coupling unit device has been completely attached linking the hydraulic/electronic connections and PTO shaft, seen in **figure 5** and **figure 1****.**

## Claims

1. **PTO/hydraulics coupling device, comprising:**
A lifting frame substructure (**figure 8**) consisting of two parallel mounting plates (**1, 2**) which are tailored and bolted to a tractor's back-end centre housing (**110**);
a four-point linkage lifting frame (**16, 17**) that is hinged to the lifting frame substructure by linkage arms (**12, 13**);
two hydraulic piggy-back solution cylinder units (**40, 42**) that lift the four-point lifting frame (**16, 17**);
two hydraulic cylinder mounting plates (**25**) bolted to the tractor's upper back-end centre housing (**110**) that secure the two hydraulic piggy-back solution cylinders (**40, 42**), both which raise and lower the lifting frame (**16, 17**);
a PTO spring loaded coupling hub (**figure 32**) fastened to the tractor's power take off (PTO) shaft (**119**) to transfer rotary power from the tractor to the coupling unit (**figure 17**);
a hydraulic/electronic fittings connector bank (**figure 7**) bolted to the four-point lifting frame substructure (**1,2**) connecting hydraulic/electrical connectors (**29, 30**) to the coupling unit hydraulic/electrical connectors (**65, 66**) (**figure 20**);
a coupling unit (**figure 17**) which transfers from tractor to implement (**110, 120**) and that links with the PTO spring loaded coupling hub (**figure 32**) and the hydraulic/electronic fittings connector bank (**figure 7**);
foldable hydraulic coupling unit resting stand (**87, figure 26**) pivotally mounted on clamping plates (**76**) bolted to the implement's drawbar (**120**) that holds the coupling unit (**figure 17**) when not attached to the four-point lifting frame (**16, 17**);
a hydraulic jackleg (**99**, **figure 24**) pivotally mounted on the implement's drawbar (**120**) to elevate the coupling unit resting stand (**87, figure 24**) to the correct height when attaching the coupling unit (**figure 17**);
inseparable three stage PTO drive shaft (**figure 34**) secured at one end to the coupling unit's transfer shaft (**72**) and the other end to the implement driven member (**137**) not allowing the coupling unit (**figure 17**) to be separated from implement (**137**).

2. **Base Frame in accordance with claim 1,** wherein:
the structural base frame has two parallel mounting side plates (**1, 2**) with 90 degree formed folds left and right with slotted holes to allow for fine height adjustable alignment of the coupling unit's transfer shaft (**72**) with the tractor's PTO shaft (**119**), these mounting plates (**1, 2**) bolt to the tractor's back-end centre housing (**110**), the two parallel plates (**1, 2**) are coalesced and welded together by cross member plates (**3, 4**), cross members (**3**) that are welded to the inner side of both parallel mounting plates (**1, 2**) that have slotted holes to allow for fine height adjustment which are bolted to the tractors hitch frame (**111**);
the hydraulic/electronic connector bank mounting plate (**8**), with slotted holes for fine adjustable alignment is bolted to two mounting brackets (**7**) welded on the inner side of both side plates (**1, 2**), two hydraulic double acting cylinders (**35**) both bolted to mounting plate (**8**), push and pull the profiled plate (**27**) which holds the hydraulic/electronic connectors (**29, 30**), two sliding guide rods (**28**) that are welded to plate (**27**) slide within two bushing guide pipes (**9**) that are welded to the inner side of the mounting plate (**8**) to keep the hydraulic/electronic connectors (**29, 30**) connecting with accuracy;
four profiled and formed linkage arms (**12, 13**) with inserted and welded bushing sleeves (**11, 157**) pivot on four bearings (**158**) to allow it to be raised and lowered, are secured in place by inner circlips to the sleeve (**11, 157**), pivotally mounted and secured by an exterior circlip on the four hinging pins (**5, 6**) aiming outwardly and welded on the inner side on both side plates (**1, 2**);
two long nuts (**159**) that are welded to the outer side of both linkage arms (**13**) with adjuster bolts (**21**) are used as a stopper for the linkage arm (**12**), a profiled hook shape is incorporated into linkage arm (**13**) that secures the coupling unit lifting bar in place (**47**);
two long nuts (**139**) that are welded to the outer side of both side plates (**1, 2**) with adjuster bolts (**15**) are used as a stopper for the linkage arm (**13**);
two latching hooks (**32**), that rest against stoppers (**145**), these latching hooks (**32**) are pivotally mounted and are secured in place with an exterior circlip, on hook hinge pins (**10**) aiming inwardly and welded on the outer side of both side plates (**1, 2**), torsion springs (**144**) mounted on the hooks spring pin (**142**) and also on a base spring pin (**143**) on both side plates (**1, 2**) to keep tension on the latching hook (**32**) when in contact with lifting frame latching bar (**22**).

3. **four-point lifting frame in accordance with claim 2,**
furthermore, the base frame is the anchor for the four-point lifting frame comprising of, two four-point profiled and formed lifting hook plates (**16, 17**) that have a stepped fold at their lower end to avoid collision with side plates (**1, 2**), a stability cross member (**18**) is welded on the inner side of the lifting hooks (**16, 17**);
four linkage hinge pins (**23, 149**) aiming outwardly located and welded on the inner side of hook plates (**16, 17**) for mounting of bearings (**38**) that are secured by an exterior circlip, the bearings (**38**) which are pivotally mounted and secured by an inner circlip within bushing sleeves (**155, 156**) are inserted and welded to linkage arms (**12, 13**);
two latching bracket plates (**19, 20**) are welded aiming inwardly to the back of both hook plates (**16, 17**), which halters the latching bar (**22**).

4. **Piggy-back hydraulic cylinders in accordance with claim 2,**
wherein two hydraulic piggy-back solution cylinder barrels (**40, 42**) are welded back to back in opposite directions with extending cylinder rods (**150, 151**), two bushing guide sleeves (**153**) are welded to the inner side of both barrels (**40, 42**), two sliding guide rods (**152**) that are fixed to the cylinder rod (**150**) by an adjoining brace plate (**154**) are used to keep the cylinder barrels (**40, 42**) in a parallel position with the side plates (**1, 2**);
bolted to the tractor's back-end centre housing are two piggy-back cylinder mounting plates (**25**) with two cylinder bolting plates (**26**) welded on each plate (**25**) that bolts and secures the piggy-back cylinder rod (**150**), the cylinder rod (**151**) is pivotally mounted and secured by and exterior circlip on a hinging pin (**14**) on the outer side of linkage arm (**13**).

5. **Coupling unit in accordance with claim 2,**
wherein a structural frame (4**5**) has a square profiled hole, welded in it a formed hollow box section frame (**46**) with triangular gussets (**160**) welded on the top corners of the box section frame (**46**) to the structural frame (**45**), eight rectangular holes with two on each side of the box section frame (**46**), which has inserted nylon wear guides (**67**) held in place by face plates (**50, 59**), an adjuster nut (**140**) is welded to the centre of face plate (**59**) with an adjuster bolt (**39**) to tighten the nylon wear guides (**67**), that press against a hollow telescopic box section (**68**) which slides within the box section frame (**46**), welded to the outer front side of the box section (**68**) is a profiled face plate (**69**), where there is the spacer plate (**71**) and carrier bearing (**70**) haltered and bolted to the inner back side of face plate (**69**), the power take off (PTO) transfer shaft (**72**) is a solid shaft, with an exterior standard 6 spline PTO shaft at the implement side of the transfer shaft (**72**), where it then steps up to a larger diameter that seats within the carrier bearing (**70**), then from the bearing (**70**) on the transfer shaft (**72**) it has a larger diameter stepped shoulder, protruding through face plate (**69**) with a jaw coupler (**73**) that is welded to the end of the exterior surface on the tractor side of transfer shaft (**72**), this end shaft has a short segment of machined out hollow section, for alignment of the tractors PTO shaft (**119**) with the transfer shaft (**72**);
two hydraulic cylinders (**61**) that has mounting brackets (**62**) welded to the opposite side to the hydraulic ports on hydraulic cylinder (**61**) and are pivotally mounted on a hinge pin (**60**) that is inserted and welded, one each side of the formed hollow box section frame (**46**), the hydraulic cylinder rods (**74**) have a thread end and are bolted to the face plate (**69**) by a lock nut (**75**), which extends and retracts the box section (**68**);
a cross member lifting bar (**47**) is welded to the top front face of the structural frame (**45**) that is fitted with slide prevention stopper washers (**53**) on each outer side of the lifting bar (**47**), it is also fitted with tapered guide plates (**51**) that are welded to and pressed against each folded side of the structural frame (**45**) and are used to guide connection of the four-point lifting hook plates (**16, 17**), two lower lifting pins (**48**) are inserted and welded in a circular profiled hole on each folded side of the structural frame (**45**);
six circular profiled holes in the bottom front face of the structural frame (**45**) halter the receiving hydraulic/electronic power connectors (**65, 66**), two guide bushings (**52**) align with the hydraulic/ electronic connector bank guide rods (**28**);
the folded 90 degree holding stand plate (**55**) is bolted by counter sunk bolts to the bottom mounting plate (**54**) of the structural frame (**45**) and to the mounting plate (**58**) which is welded to the bottom of box section frame (**46**), the coupling unit resting pin (**56**) is inserted and secured to the outer back side of resting stand plate (**55**), a circular catching plate (**57**) is welded to end of the resting pin (**56**) which is used to prevent the coupling unit from sliding off the resting stand plate (**87**).

6. **Spring loaded coupling hub in accordance with claim 5,**
wherein a securing sleeve (**124**) is secured by grub screws (**130**) to the tractors PTO shaft (**119**), a circular backing plate (**125**) that has a centre hole and is welded to securing sleeve (**124**) having an inwardly protruding shoulder to centre compression spring (**126**);
three threaded holes in backing plate (**125**) with bolts (**129**) which hold spring clamps (**127**) clamped to the compression spring (**126**), on the opposite side of compression spring (**126**) it is held by spring clamps (**127**) which are bolted by bolts (**128**) to threaded holes in jaw coupler (**122**), the jaw coupler (**122**) having a machined centre hole with a welded in 6 splined PTO sleeve (**123**) which also has a protruding inwardly shoulder to centre the compression spring (**126**) that is welded in the centre hole of the jaw coupler (**122**), this jaw coupler (**122**) is what keeps the PTO engaged under compression by compression spring (**126**).

7. **Resting Stand in accordance with claim 5,**
wherein two side clamping plates (**76**) are clamped and bolted (**107, 108**) to both sides of the implement's drawbar (**120**), a profiled hole in clamping plates (**76**) has a pivotally hinging pin (**90**), welded to the tangential surface of pin (**90**) is a profiled stand plate (**87**) which has V shaped cut out leading into a U shaped slot in stand plate (**87**), this is where the coupling unit's resting pin (**56**) rests upon when in its idle position and subsequently latches onto the coupling units catch plate (**57**);
two levelling brackets (**94, 95**) that are welded to the front face of stand plate (**87**) level the coupling unit by meeting the holding stand plate (**55**), two long nuts (**96**) and adjuster bolts (**141**) are used to set the angle of stand plate (**87**) and adjust against the implements drawbar (**120**), two formed strengthening plates (**88**) are welded to the back side of stand plate (**87**) four cylinder mounting brackets (**91**) are welded to the outer back left and right wings of stand plate (**87**);
two hydraulic cylinders (**97**) are bolted to mounting plates (**91**) and pivotally mounted on fixed pin (**78**) that is welded to both outer sides of side clamping plates (**76**) which raise and lower stand plate (**87**), two tyre bumper guards (**86, 98**) with a cut out slot for the hydraulic cylinder (**97**) have four welded on bolding tabs (**82**) to the tyre bumper guards (**86, 98**) that are then bolted by bolts (**107, 108**) on the outer side of both side clamping plates (**76**);
a base plate (**79**) has welded on bolting tabs (**89**) that are bolted by bolts (**108**) to the inner side between both side clamping plates (**76**) on the underside of the implements drawbar (**120**), two jack leg mounting plates (**81**) that are welded to base plate (**79**) halters pivotally bolted jack leg side plates (**99**), a bracing plate (**92**) is welded between jack leg side plates (**99**) along with a wear pivot bushing (**93**), pivotally bolted to the bottom exterior side jack leg side plates (**99**) is a jack leg foot consisting of two pivot mounting plates (**106**) welded to a profiled and folded ground plate (**105**);
two hydraulic cylinder mounting brackets (**80**) are welded to the bottom side of base plate (**79**), hydraulic cylinder (**103**) is pivotally bolted to mounting plates (**80**) and its cylinder rod (**102**) secured to jack leg side plates (**99**) which raise and lower the jack leg plates (**99**) when attaching and detaching the implements drawbar (**120**);
an alternative resting stand design, that has a folded base plate (**146**) which is welded to the implement's drawbar (**120**), a bored circular hole has an inserted and welded centre pivot pin (**148**);
pivoting on this is a coupling unit profiled resting plate (**147**), which has a V shaped cut out leading into a U slot profile, that halters the coupling unit resting pin (**56**);
the profiled resting plate (**147**) is folded 90 degrees which is pivotally mounted on pivot pin (**148**), a cut out semi-circle track on resting plate (**147**) rotates to the angle that is required when attaching or detaching the coupling unit and parallel with plate (**55**) until the resting plate (**147**) meets stoppers located on folded base plate (**146**).

8. **Inseparable Drive Shaft in accordance with claim 5,**
wherein a universal joint made up of a PTO 6 splined yoke end (**112**) attached at two sides of a universal joint cross (**113**) and connected to the remaining two opposite sides is another yoke end (**133**) which has an inserted roll pin (**114**) that secures it to a profiled tube (**134**) which has a 50mm long stepped section of inner splines at the end of profiled tube (**134**);
a second smaller centre profiled tube (**135**) which has exterior splined surface almost the full length of profiled tube (**135**) that slides within and meshes with the inner splines of profiled tube (**134**) a 12mm thick stepped stopper shoulder is machined larger than the splined surface at one end of profiled tube (**135**) which meets with the inner stepped splined shoulder in profiled tube (**134**) to prevent separation of profiled tube (**134**) and profiled tube (**135**), also having a 50mm long stepped section of inner splines at the opposite end of profiled tube (**135**);
profiled tube (**135**) meshes and slides over and on the exterior splined surface of profiled shaft (**136**) which is a solid shaft with exterior splines almost the full length of the profiled shaft (**136**) along with a 12mm thick stepped stopper shoulder machined larger than the splined surface at one end of profiled shaft (**136**) this shoulder meets with the inner stepped splined shoulder in profiled tube (**135**) to prevent separation of profiled tube (**135**) and profiled shaft (**134**) secured by roll pin (**115**) profiled shaft (**134**) is inserted into yoke end (**138**) attached to sides of a universal joint cross (**132**) and connected to the remaining two opposite sides of the universal joint cross (**132**) is a PTO 6 splined yoke end (**131**).
